# FASCICULE DE BREVET EUROPEEN

(11) **EP 1 501 163 B1**
(45) Date de publication et mention de la délivrance du brevet: **04.11.2009**
(21) Numéro de dépôt: 04356133.1
(22) Date de dépôt: 20.07.2004
(51) Int. Cl.: H02G 3/06, H02G 3/04

(54) **Dispositif d'assemblage de deux goulottes d'un chemin de câbles, et chemin de câbles comprenant un tel dispositif**
Verbindungsvorrichtung von zwei Kabelrinnen einer Kabelbahn und Kabelbahn mit einer solchen Vorrichtung
Arrangement for assembling two wireways of a cable guide and cable guide using such an arrangement

(30) Priorité: 21.07.2003 FR 0308869
(43) Date de publication de la demande: 26.01.2005
(73) Titulaire: Gewiss France SAS, 21430 Liernais (FR)
(72) Inventeur: Lebrat, Jean-Pascal, 71640 Givry (FR); Garnier, André, 58230 Montsauche Les Settons (FR)
(74) Mandataire: Myon, Gérard Jean-Pierre

(56) Documents cités:
- FR-A- 2 821 211
- FR-A- 2 825 528

## Description

La présente invention concerne un dispositif d'assemblage de deux goulottes de chemin de câbles mises bout à bout, ainsi qu'un chemin de câbles comprenant un tel dispositif d'assemblage.

Dans la demande de brevet français n° 2 687 207, il est décrit une éclisse d'assemblage de deux goulottes, qui sont disposées dans le prolongement l'une de l'autre et dont chacune est constituée d'un treillis de fils de trame et de chaîne soudés les uns aux autres. Cette éclisse, résultant de la mise en forme d'un flan métallique, définit quatre pattes de clipage disposées le long d'une direction axiale, ainsi que deux rebords, dont chacun est recourbé de manière à délimiter l'une de deux gorges dans le prolongement l'une de l'autre. Le montage de cette éclisse commence par l'accrochage simultané d'un rebord recourbé à un fil de chaîne d'un fond d'une des goulottes et de l'autre rebord recourbé à un fil de chaîne d'un fond de l'autre goulotte. Ensuite, tout en maintenant ces rebords accrochés, on bascule l'éclisse vers le haut jusqu'à ce que les pattes de clipage se clipent sur des fils de chaîne latéraux.

Il ressort de ce qui précède que l'éclisse ne peut être installée qu'après les deux goulottes. De ce fait, elle ne peut pas être pré-montée sur l'une de ces goulottes.

Il est par ailleurs connu de FR-A-2 825 528 d'assembler des goulottes de chemin de câbles en treillis au moyen d'éclisses formées par des fers plats allongés et soudés à l'extrémité d'une goulotte, alors que des plaquettes sont rapportées sur l'autre goulotte pour définir chacune avec celle-ci un fourreau de réception d'une éclisse. Les éclisses rallongent les goulottes et doivent être engagées avec un mouvement axial dans les fourreaux correspondants, ce qui est parfois problématique compte tenu de l'encombrement des goulottes.

L'invention a donc au moins pour but de permettre que l'assemblage de goulottes au moyen de dispositifs d'assemblage puisse avoir lieu seulement après que ces derniers ont été installés sur les goulottes.

A cet effet, l'invention a pour objet un dispositif d'assemblage de première et deuxième goulottes de chemin de câbles mises bout à bout, chacune des première et deuxième goulottes comportant un treillis résultant du soudage de fils de chaîne sensiblement longitudinaux à des fils de trame sensiblement transversaux, ce dispositif comportant :
- un premier élément monté sur la première goulotte et pourvu de premiers moyens d'accouplement,
- un deuxième élément monté sur la deuxième goulotte, pourvu de deuxièmes moyens d'accouplement complémentaires des premiers moyens d'accouplement et
- des moyens d'immobilisation du deuxième élément dans la deuxième position,
**caractérisé en ce que** le deuxième élément est mobile par rapport à la deuxième goulotte entre une première position, dans laquelle ce deuxième élément et le premier élément sont découplés, et une deuxième position, dans laquelle les premiers et les deuxième moyens d'accouplement accouplent le premier et le deuxième élément l'un à l'autre.

Selon d'autres caractéristiques avantageuses de ce dispositif d'assemblage :
- le deuxième élément est monté à pivotement sur un fil de trame de la deuxième goulotte ;
- les deuxièmes moyens d'accouplement comportent un doigt de traction basculant entre ladite première position et ladite deuxième position, dans laquelle ce doigt de traction exerce sur le premier élément un effort de traction ;
- le deuxième élément comporte un crochet prévu pour immobiliser ce deuxième élément dans ladite deuxième position en étant accroché à l'un des fils de chaîne et de trame de l'une des première et deuxième goulottes ;
- le deuxième élément comporte un fil métallique mis en forme de manière à comprendre au moins :
   . un premier tronçon formant ledit doigt de traction,
   . un deuxième tronçon formant ledit crochet,
   . un troisième tronçon se trouvant entre les premier et deuxième tronçons, à distance du deuxième tronçon, et formant un enroulement s'enroulant à jeu réduit autour du fil de trame sur lequel est monté le deuxième élément, et
   . un quatrième tronçon reliant le deuxième au troisième tronçon ;
- les premiers moyens d'accouplement sont configurés de manière à délimiter un passage pour le doigt de traction ;
- le premier élément comporte un fil métallique mis en forme de manière à comprendre au moins :
   . un premier tronçon formant une boucle de retenue dans lequel passe un fil de trame de la première goulotte, et
   . un deuxième tronçon présentant la forme d'un demi-tour qui forme lesdits premiers moyens d'accouplement et délimite ledit passage pour le doigt de traction ;
- le premier élément définit deux entretoises d'espacement d'un fil de trame d'extrémité de la première goulotte et d'un fil de trame d'extrémité de la deuxième goulotte, ces deux entretoises étant écartées au moins verticalement l'une de l'autre ;
- le fil métallique constituant le premier élément est mis en forme de manière à comprendre des troisième et quatrième tronçons dont chacun forme l'une desdites deux entretoises et entre lesquels est placé le demi-tour formant les premiers moyens d'accouplement.

L'invention a également pour objet un chemin de câbles ou analogue, comportant au moins des première et deuxième goulottes qui sont mises bout à bout et dont chacune comprend un fond, ainsi que des premier et deuxième côtés, chacune des première et deuxième goulottes comportant un treillis résultant du soudage de fils de chaîne sensiblement longitudinaux à des fils de trame sensiblement transversaux, caractérisé en ce qu'il comporte un premier et un deuxième dispositif d'assemblage tels que définis ci-dessus, le premier dispositif d'assemblage assemblant le premier côté de la première goulotte au premier côté de la deuxième goulotte, le deuxième dispositif d'assemblage assemblant le deuxième côté de la première goulotte au deuxième côté de la deuxième goulotte.

L'invention sera bien comprise à la lecture de la description qui va suivre, donnée uniquement à titre d'exemple et faite en se référant aux dessins annexés, sur lesquels :
- la figure 1 est une vue en perspective d'un tronçon qui fait partie d'un chemin de câbles conforme à l'invention et dans lequel deux goulottes successives sont maintenues assemblées par deux dispositifs d'assemblage selon un premier mode de réalisation de l'invention ;
- la figure 2 est une vue en perspective d'un premier élément constitutif de chacun des deux dispositifs d'assemblage représentés à la figure 1 ;
- la figure 3 est une vue en perspective d'un deuxième élément constitutif de chacun des deux dispositifs d'assemblage représentés à la figure 1 ;
- la figure 4 est une vue en perspective du tronçon représenté à la figure 1 et illustre une étape de l'assemblage des deux goulottes au moyen des deux dispositifs d'assemblage ;
- la figure 5 est une vue en perspective d'un tronçon qui fait partie d'un chemin de câbles conforme à l'invention et dans lequel deux goulottes successives sont maintenues assemblées au moyen de deux dispositifs d'assemblage selon un deuxième mode de réalisation de l'invention ; et
- la figure 6 est une vue en perspective d'un tronçon qui fait partie d'un chemin de câbles conforme à l'invention et dans lequel deux goulottes successives sont assemblées au moyen de deux dispositifs d'assemblage selon un troisième mode de réalisation de l'invention.

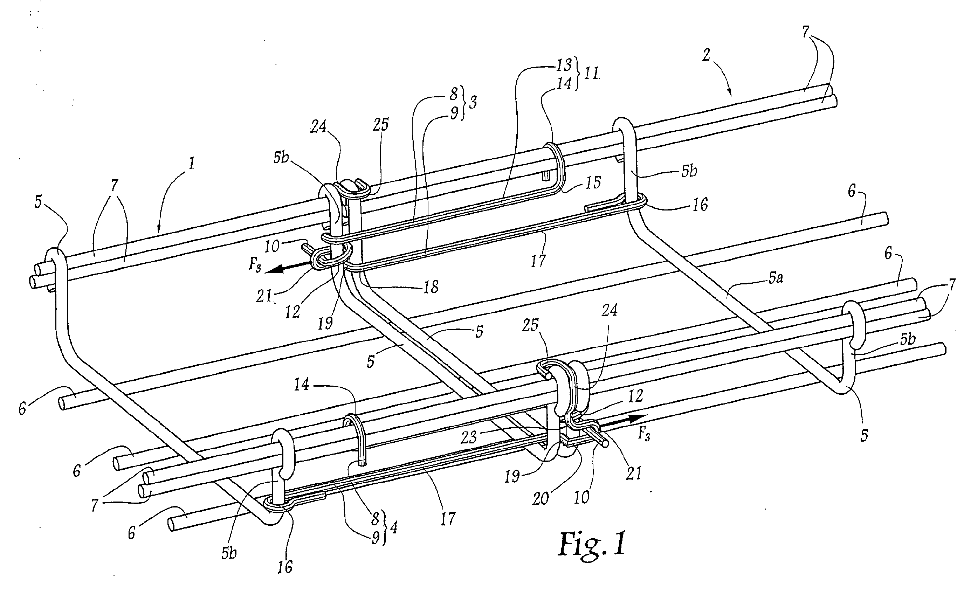

Sur la figure 1, un tronçon de chemin de câble comporte deux goulottes 1 et 2 successives, identiques et partiellement représentées, que maintiennent assemblées deux dispositifs identiques d'assemblage 3 et 4 selon un premier mode de réalisation de l'invention.

Chacune des goulottes 1 et 2 est constituée d'un treillis résultant du soudage de fils métalliques de chaîne, sensiblement longitudinaux, à des fils métalliques de trame 5, sensiblement transversaux. Certains fils de chaîne, référencés 6, font partie du fond que comporte chacune de ces goulottes 1 et 2. Les autres fils de chaîne sont référencés 7 et appartiennent à l'un des deux côtés que possède chacune des goulottes 1 et 2.

Chaque fil de trame 5 a globalement la forme d'un U et comprend deux tronçons 5b formant montants, ainsi qu'un tronçon 5a qui forme traverse et relie ces tronçons 5b l'un à l'autre. Ce tronçon 5a fait partie du fond de l'une des deux goulottes 1 et 2, tandis que l'un et l'autre tronçon 5b appartiennent respectivement à l'un et l'autre côté de la goulotte 1 ou de la goulotte 2.

Chacun des dispositifs d'assemblage 3 et 4 comporte deux éléments, à savoir un élément mobile de verrouillage 8 et un élément fixe 9. L'un de ces deux éléments 8 et 9 est monté sur la goulotte 1, tandis que l'autre est installé sur la goulotte 2.

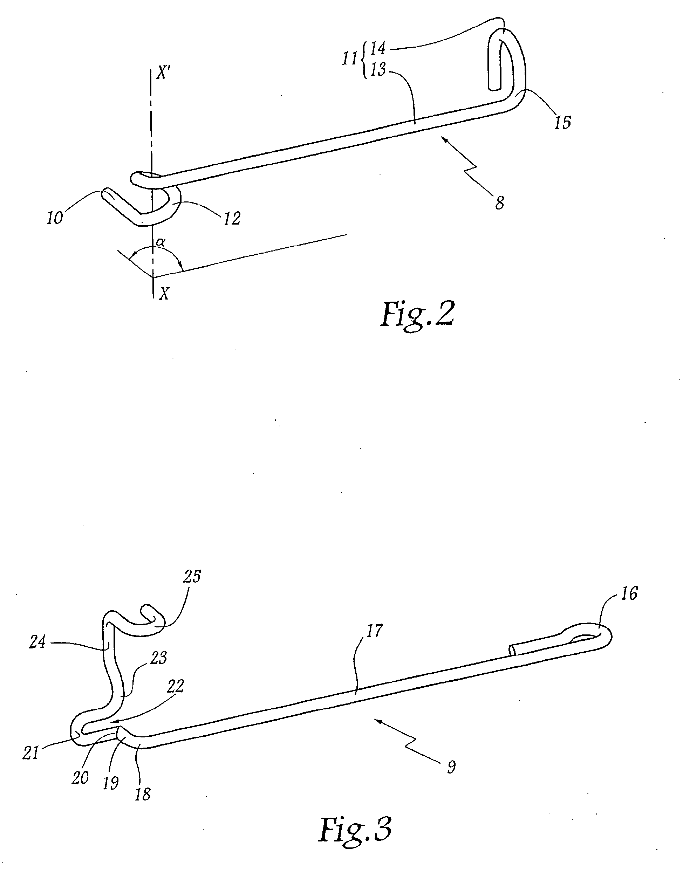

Un élément mobile de verrouillage 8 est représenté seul à la figure 2. Il résulte de la mise en forme d'un fil métallique et a globalement la forme d'un levier dont les deux bras 10 et 11 sont reliés l'un à l'autre par un enroulement 12. Ce dernier est conçu pour entourer un montant 5b d'un fil de trame 5 d'extrémité, sans le serrer, si bien que l'élément 8 dont il fait partie est monté à pivotement autour de ce montant 5b. Le bras 10 forme un doigt de traction d'un élément 9. Ce doigt de traction 10 et le bras 11 sont décalés l'un de l'autre, autour de l'axe X-X' de pivotement de l'élément 8, d'un angle α égal à environ 90°. Le bras 11 comporte un tronçon sensiblement rectiligne 13 et un tronçon d'extrémité en forme de crochet 14. Ce dernier s'étend dans un plan sensiblement perpendiculaire au tronçon rectiligne 13, du fait de la présence d'un coude à 90° 15 qui le relie à ce tronçon 13.

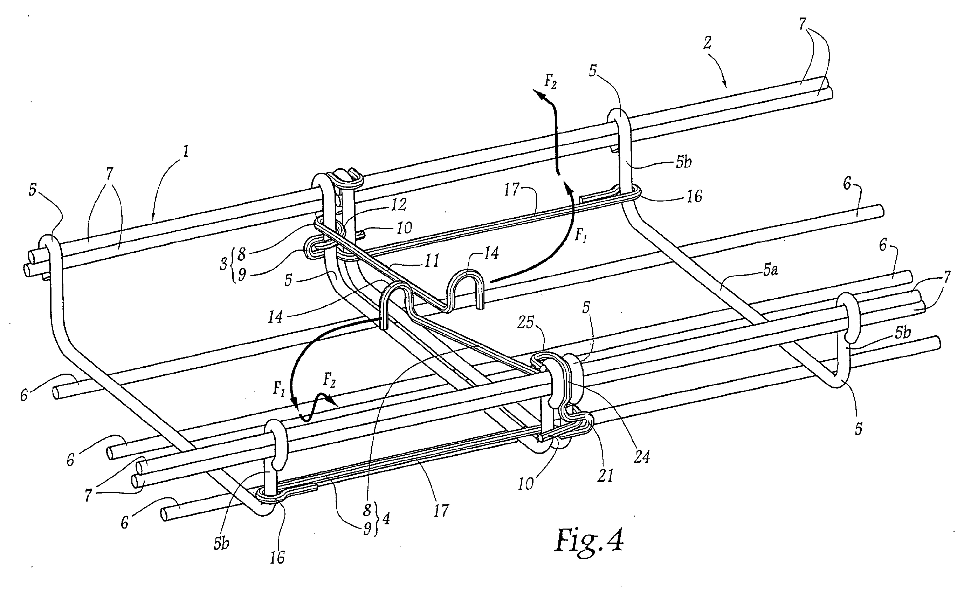

Un élément fixe 9, qui est constitué d'un fil métallique mis en forme, est représenté seul à la figure 3. Un tronçon de ce fil présente la forme d'une boucle de retenue 16, dans laquelle passe un montant 5b d'un fil de trame 5 lorsque cet élément est monté sur une console 1 ou 2. Cette boucle 16 se prolonge par un tronçon 17 sensiblement rectiligne, qu'un coude 18 sensiblement à angle droit relie à un tronçon 19 formant entretoise. Un coude 20 sensiblement à angle droit, inversé par rapport au coude 18, relie ce tronçon 19 à un tronçon 21, qui forme un demi-tour et délimite ainsi une encoche 22 pour le passage du doigt de traction 10 d'un élément 8. Comme on peut le voir aux figures 1 et 4, le demi-tour 21 dépasse de la goulotte 1 ou 2 portant l'élément 9 dont il fait partie. Un coude 23 sensiblement à angle droit relie ce demi-tour 21 à un tronçon 24, qui forme entretoise et qui est décalé du tronçon 19 vers le haut. Ce tronçon 24, qui se termine par un crochet 25 destiné à entourer partiellement un fil de trame 5 d'extrémité, est configuré de manière à passer de l'extérieur à l'intérieur du chemin de câble en contournant par le dessus des extrémités de plusieurs fils de chaîne 7, une fois que l'élément 8 dont il fait partie participe à l'assemblage des goulottes 1 et 2.

Les dispositifs d'assemblage 3 et 4 sont particulièrement peu coûteux, puisque leurs éléments 8 et 9 sont constitués de fils métalliques mis en forme, lesquels présentent en outre l'avantage d'avoir un aspect qui se marie avec celui des goulottes 1 et 2.

Conformément au but de l'invention, ces dispositifs d'assemblage 3 et 4 peuvent être montés sur les goulottes 1 et 2 avant l'assemblage de ces dernières.

Avant d'être assemblées, les goulottes 1 et 2 sont placées dans le prolongement l'une de l'autre. Ensuite, on déplace l'une d'elles vers l'autre, lors de quoi on prend soin d'insérer le doigt 10 de chaque élément 8 dans l'une des deux encoches 22. Suite à cela, les goulottes 1 et 2, ainsi que les dispositifs d'assemblage 3 et 4, sont tels qu'illustrés à la figure 4. Sur cette dernières, des flèches F₁ illustrent le fait qu'on fait alors pivoter les éléments 8 de telle manière que chaque doigt de traction 10 bascule vers un demi-tour 21 puis agisse sur ce demi-tour 21. Ensuite, en courbant élastiquement vers le haut, puis en basculant et enfin en relâchant chaque tronçon rectiligne 13, on accroche chaque crochet 14 à un fil de chaîne 7, comme représenté par les flèches F₂, après quoi les goulottes 1 et 2 sont assemblées.

Il ressort de ce qui précède que l'assemblage des goulottes 1 et 2 à l'aide des dispositifs d'assemblage 3 et 4 est une opération simple à effectuer. En particulier, elle ne requiert pas une étape préalable ayant comme but un positionnement précis de ces goulottes 1 et 2 l'une par rapport à l'autre, puisque ce positionnement résulte de l'action des doigts de traction 10 sur les demi-tours 21, lors du pivotement des éléments 8.

Sur la figure 1, les goulottes 1 et 2 sont maintenues assemblées par les dispositifs d'assemblage 3 et 4, dont chacun accouple un côté de la goulotte 1 à un côté de la goulotte 2. Chaque crochet 14 immobilise l'élément 8 dont il fait partie. Le doigt de traction 10 et le demi-tour 21 d'un même dispositif d'assemblage 3 ou 4 sont en prise et coopèrent à la manière de moyens complémentaires d'accouplement des éléments 8 et 9 auxquels ils appartiennent. La valeur de l'angle α entre le doigt de traction 10 et le bras 11 d'un même élément 8 au repos est choisie de telle manière que cet élément 8 soit déformé élastiquement lorsqu'il est définitivement installé, c'est-à-dire tel qu'illustré à la figure 1. Les contraintes de rappel qui s'exercent, de ce fait, à l'intérieur d'un élément 8 définitivement installé, font que le doigt 10 de cet élément 8 exerce sur l'élément 9 correspondant un effort de traction F₃ globalement parallèle à la direction longitudinale de la goulotte sur laquelle est installé l'élément 9, c'est-à-dire aux fils de chaîne 6 et 7.

Toujours sur la figure 4, les tronçons 19 et 24, formant entretoises inférieure et supérieure, sont intercalés, à deux hauteurs différentes, entre un fil de trame 5 d'extrémité de la goulotte 1 et un fil de trame 5 d'extrémité de la goulotte 2, si bien que les écarts qu'ils maintiennent entre les montants 5b contigus de ces fils de trame 5 sont sensiblement constant le long de ces montants 5b. Cela limite, voire évite, la déformation du chemin de câble chargé, et plus précisément la flèche consécutive à un basculement des goulottes 1 et 2 l'une par rapport à l'autre.

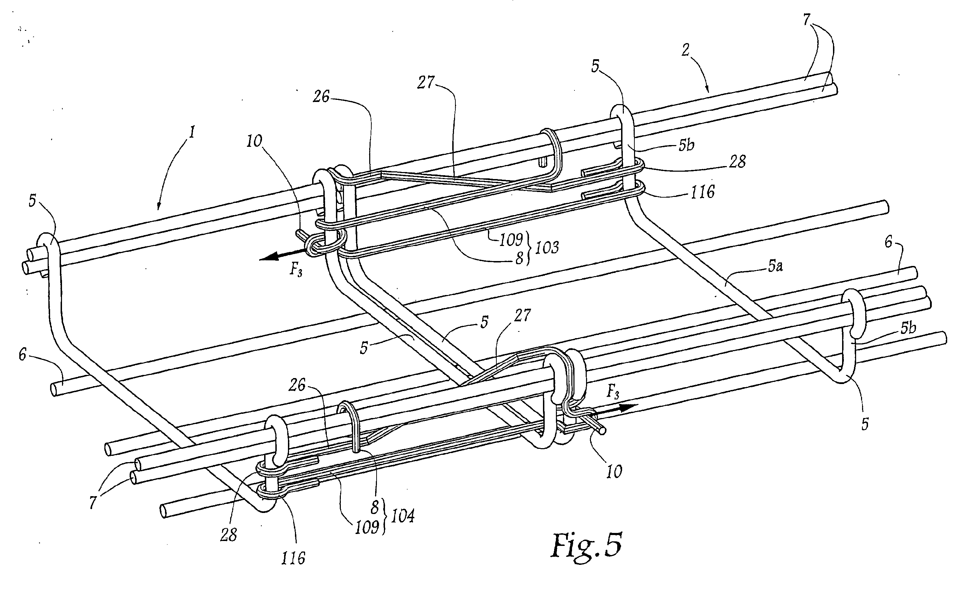

Sur la figure 5, deux dispositif d'assemblage 103 et 104 selon un deuxième mode de réalisation de l'invention maintiennent assemblées les goulottes 1 et 2 précédemment décrites. Chacun de ces dispositifs d'assemblage 103 et 104 comporte un élément fixe 109 et un élément mobile de verrouillage 8 identique aux éléments 8 décrits précédemment. L'élément 109 remplit la même fonction que l'élément 9 du premier mode de réalisation de l'invention. Il se distingue de cet élément 9 en ce qu'il ne comporte pas de crochet 25, mais, à la place de ce dernier, une branche 26. Dans ce qui suit, la référence 116 désigne la boucle de retenue que comporte l'élément 109 et qui correspond à la boucle de retenue 16 de l'élément 9. La branche 26, qui comporte un tronçon oblique 27, définit une autre boucle de retenue 28, qui entoure le même montant 5b que la boucle de retenue 116.

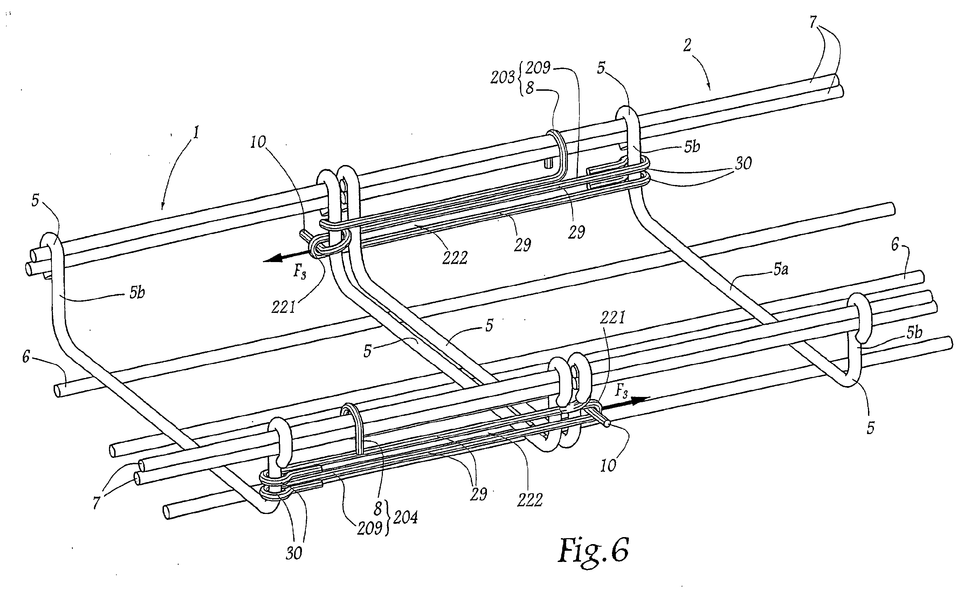

Sur la figure 6, deux dispositifs d'assemblage 203 et 204 selon un troisième mode de réalisation de l'invention maintiennent assemblées les goulottes 1 et 2 précédemment décrites. Chacun de ces dispositifs d'assemblage 203 et 204 comporte un élément 209 et un élément mobile de verrouillage 8 identique aux éléments 8 décrits précédemment. L'élément 209, qui remplit la même fonction que l'élément 9 du premier mode de réalisation, est constitué d'un fil métallique mis en forme. Il a globalement la forme d'un U, dont chacune des deux branches sensiblement rectilignes 29 se termine par un tronçon formant l'une de deux boucles de retenue 30. A l'opposé de ces dernières, dans lesquelles passe un même montant 5b d'un fil de trame 5, un demi-tour 221, remplissant la même fonction que le demi-tour 21 de l'élément 9, relie les branches 29 l'une à l'autre. L'élément 209 délimite une fente 222 pour le passage d'un doigt de traction 10.

L'invention ne se limite pas aux modes de réalisation décrits précédemment. En particulier, l'un au moins des éléments 8, 9, 109 et 209 peut ne pas être constitué d'un fil métallique mis en forme. Par exemple, il peut être réalisé dans un flan métallique.

## Revendications

1. Dispositif d'assemblage de première et deuxième goulottes (1, 2) de chemin de câbles mises bout à bout, chacune des première et deuxième goulottes (1, 2) comportant un treillis résultant du soudage de fils de chaîne sensiblement longitudinaux (6, 7) à des fils de trame sensiblement transversaux (5), ce dispositif comportant :
- un premier élément (9 ; 109 ; 209) monté sur la première goulotte (1) et pourvu de premiers moyens d'accouplement (21 ; 221),
- un deuxième élément (8) monté sur la deuxième goulotte (2), pourvu de deuxièmes moyens d'accouplement (10) complémentaires des premiers moyens d'accouplement (21 ; 221) et
- des moyens (14) d'immobilisation du deuxième élément (8) dans la deuxième position,
**caractérisé en ce que** le deuxième élément (8)) est mobile par rapport à la deuxième goulotte (2) entre une première position, dans laquelle ce deuxième élément (8) et le premier élément (9 ; 109 ; 209) sont découplés, et une deuxième position, dans laquelle les premiers (21 ; 221) et les deuxièmes moyens d'accouplement (10) accouplent le premier (9 ; 109 ; 209) et le deuxième élément (8) l'un à l'autre.

2. Dispositif selon la revendication 1, **caractérisé en ce que** le deuxième élément (8) est monté à pivotement sur un fil de trame (5) de la deuxième goulotte (2).

3. Dispositif selon la revendication 2, **caractérisé en ce que** les deuxièmes moyens d'accouplement comportent un doigt de traction (10) basculant entre ladite première position et ladite deuxième position, dans laquelle ce doigt de traction (10) exerce sur le premier élément (9 ; 109 ; 209) un effort de traction (F₃).

4. Dispositif selon la revendication 2 ou 3, **caractérisé en ce que** le deuxième élément (8) comporte un crochet (14) prévu pour immobiliser ce deuxième élément (8) dans ladite deuxième position en étant accroché à l'un des fils de chaîne et de trame (5, 6, 7) de l'une des première et deuxième goulottes (1, 2).

5. Dispositif selon les revendications 3 et 4, **caractérisé en ce que** le deuxième élément (8) comporte un fil métallique mis en forme de manière à comprendre au moins :
- un premier tronçon (10) formant ledit doigt de traction,
- un deuxième tronçon (14) formant ledit crochet,
- un troisième tronçon (12) se trouvant entre les premier et deuxième tronçons (10, 14), à distance du deuxième tronçon (14), et formant un enroulement s'enroulant à jeu réduit autour du fil de trame (5) sur lequel est monté le deuxième élément (8), et
- un quatrième tronçon (13) reliant le deuxième (14) au troisième tronçon (12).

6. Dispositif selon la revendication 3 ou 5, **caractérisé en ce que** les premiers moyens d'accouplement (21 ; 221) sont configurés de manière à délimiter un passage (22 ; 222) pour le doigt de traction (10).

7. Dispositif selon la revendication 6, **caractérisé en ce que** le premier élément (9 ; 109 ; 209) comporte un fil métallique mis en forme de manière à comprendre au moins :
- un premier tronçon formant une boucle de retenue (16 ; 116 ; 30) dans lequel passe un fil de trame (5) de la première goulotte (1), et
- un deuxième tronçon présentant la forme d'un demi-tour (21 ; 221) qui forme lesdits premiers moyens d'accouplement et délimite ledit passage (22 ; 222) pour le doigt de traction (10).

8. Dispositif selon l'une quelconque des revendications précédentes, **caractérisé en ce que** le premier élément (9 ; 109) définit deux entretoises (19, 24) d'espacement d'un fil de trame d'extrémité (5) de la première goulotte (1) et d'un fil de trame d'extrémité (5) de la deuxième goulotte (2), ces deux entretoises (19, 24) étant écartées au moins verticalement l'une de l'autre.

9. Dispositif selon les revendications 7 et 8, **caractérisé en ce que** le fil métallique constituant le premier élément (9 ; 109) est mis en forme de manière à comprendre des troisième et quatrième tronçons (19, 24) dont chacun forme l'une desdites deux entretoises et entre lesquels est placé le demi-tour (21) formant les premiers moyens d'accouplement.

10. Chemin de câbles ou analogue, comportant au moins des première et deuxième goulottes (1, 2) qui sont mises bout à bout et dont chacune comprend un fond, ainsi que des premier et deuxième côtés, chacune des première et deuxième goulottes (1, 2) comportant un treillis résultant du soudage de fils de chaîne sensiblement longitudinaux (6, 7) à des fils de trame sensiblement transversaux (5), **caractérisé en ce qu'**il comporte un premier (3) et un deuxième dispositif d'assemblage (4) selon l'une quelconque des revendications précédentes, le premier dispositif d'assemblage (3) assemblant le premier côté de la première goulotte (1) au premier côté de la deuxième goulotte (2), le deuxième dispositif d'assemblage (4) assemblant le deuxième côté de la première goulotte (1) au deuxième côté de la deuxième goulotte (2).

## Claims

1. Device for assembling first and second cable trough channels (1, 2) which are placed end-to-end, each of the first and second channels (1, 2) comprising a trellis which results from the welding of substantially longitudinal warp wires (6, 7) to substantially transverse weft wires (5), this device comprising:
- a first element (9; 109; 209) which is mounted on the first channel (1) and which is provided with first coupling means (21; 221),
- a second element (8) which is mounted on the second channel (2) and which is provided with second coupling means (10) which complement the first coupling means (21; 221),
and
- means (14) for fixing the second element (8) in the second position,
**characterised in that** the second element (8) can be moved relative to the second channel (2) between a first position in which this second element (8) and the first element (9; 109; 209) are uncoupled, and a second position in which the first coupling means (21; 221) and the second coupling means (10) couple the first element (9; 109; 209) and the second element (8) to each other.

2. Device according to claim 1, **characterised in that** the second element (8) is pivotably mounted on a weft wire (5) of the second channel (2).

3. Device according to claim 2, **characterised in that** the second coupling means comprise a traction member (10) which pivots between the first position and the second position, in which this traction member (10) applies a traction force (F₃) to the first element (9; 109; 209).

4. Device according to claim 2 or claim 3, **characterised in that** the second element (8) comprises a hook (14) which is provided to fix this second element (8) in the second position whilst being hooked to one of the warp and weft wires (5, 6, 7) of one of the first and second channels (1, 2).

5. Device according to claims 3 and 4, **characterised in that** the second element (8) comprises a metal wire which is shaped so as to comprise at least:
- a first portion (10) which forms the traction member,
- a second portion (14) which forms the hook,
- a third portion (12) which is located between the first and second portions (10, 14), remote from the second portion (14), and which forms a winding which is wound with reduced clearance around the weft wire (5) on which the second element (8) is mounted, and
- a fourth portion (13) which connects the second portion (14) to the third portion (12).

6. Device according to claim 3 or claim 5, **characterised in that** the first coupling means (21; 221) are configured so as to delimit a passage (22; 222) for the traction member (10).

7. Device according to claim 6, **characterised in that** the first element (9; 109; 209) comprises a metal wire which is shaped so as to comprise at least:
- a first portion which forms a retention loop (16; 116; 30) in which a weft wire (5) of the first channel (1) extends, and
- a second portion which has the shape of a half-turn (21; 221) and which forms the first coupling means and which delimits the passage (22; 222) for the traction member (10).

8. Device according to any one of the preceding claims, **characterised in that** the first element (9; 109) defines two cross-members (19, 24) for spacing an end weft wire (5) of the first channel (1) and an end weft wire (5) of the second channel (2), these two cross-members (19, 24) being at least vertically spaced-apart from each other.

9. Device according to claims 7 and 8, **characterised in that** the metal wire which constitutes the first element (9; 109) is shaped so as to comprise third and fourth portions (19, 24), each one of which forms one of the two cross-members and between which the half-turn (21) which forms the first coupling means is positioned.

10. Cable trough or the like, comprising at least first and second channels (1, 2) which are placed end-to-end and each of which has a base, and first and second sides, each of the first and second channels (1, 2) comprising a trellis which results from the welding of substantially longitudinal warp wires (6, 7) to substantially transverse weft wires (5), **characterised in that** it comprises a first assembly device (3) and a second assembly device (4) according to any one of the preceding claims, the first assembly device (3) assembling the first side of the first channel (1) with respect to the first side of the second channel (2), the second assembly device (4) assembling the second side of the first channel (1) with respect to the second side of the second channel (2).

## Patentansprüche

1. Vorrichtung zur Montage von ersten und zweiten Kabelwannen (1, 2), die mit den Enden aneinandergefügt sind, wobei die ersten und die zweiten Wannen (1, 2) gebildet ist von einem Drahtgeflecht aus im Wesentlichen in Längsrichtung verlaufenden Kettendrähten (6, 7) verlötet mit im Wesentlichen in Querrichtung verlaufenden Schussdrähten (5), wobei diese Vorrichtung Folgendes umfasst:
- ein erstes Element (9; 109; 209), das auf der ersten Wanne (1) befestigt und mit ersten Kopplungsmitteln (21; 221) versehen ist,
- ein zweites Element (8), das auf der zweiten Wanne (2) befestigt und mit zweiten Kopplungsmitteln (10) versehen ist, die ergänzend zu den ersten Kopplungsmitteln (21; 221) sind, und
- Mittel zum Feststellen des zweiten Elements (8) in der zweiten Position;
**dadurch gekennzeichnet, dass** das zweite Element (8) in Bezug auf die zweite Wanne (2) zwischen einer ersten Position, in der dieses zweite Element (8) und das erste Element (9; 109, 209) entkoppelt sind, und einer zweiten Position, in der die ersten (21; 221) und die zweiten Kopplungsmittel (10) das erste (9; 109; 209) und das zweite Element (8) aneinander koppeln, bewegbar sind.

2. Vorrichtung nach Anspruch 1, **dadurch gekennzeichnet, dass** das zweite Element (8) schwenkbar auf einem Schussdraht (5) der zweiten Wanne (2) befestigt ist.

3. Vorrichtung nach Anspruch 2, **dadurch gekennzeichnet, dass** die zweiten Kopplungsmittel einen Zugfinger (10) aufweist, der zwischen der ersten und der zweiten Position, in der dieser Zugfinger (10) eine Zugkraft (F₃) auf das erste Element (9; 109, 209) ausübt, schwenkbar ist

4. Vorrichtung nach Anspruch 2 oder 3, **dadurch gekennzeichnet, dass** das zweite Element (8) einen Haken (14) zum Festlegen dieses zweite Element (8) in der zweiten Position aufweist, indem dieser an einem der Ketten- und Schussdrähte (5, 6, 7) der ersten oder der zweiten Wanne (1, 2) festgehakt wird.

5. Vorrichtung nach einem der Ansprüche 3 und 4, **dadurch gekennzeichnet, dass** das zweite Element (8) einen Metalldraht mit einer derartigen Formgebung aufweist, dass dieser zumindest Folgendes umfasst:
- einen ersten Abschnitt (10), der den Zugfinger bildet,
- einen zweiten Abschnitt (14), der den Haken bildet,
- einen dritten Abschnitt (12), der sich zwischen dem ersten und dem zweiten Abschnitt (10, 14) fern vom zweiten Abschnitt (14) befindet und eine Wicklung bildet, die spielarm um den Schussdraht (5) liegt, auf dem das zweite Element (8) befestigt ist, und
- einen vierten Abschnitt (13), der den zweiten (14) mit dem dritten Abschnitt (12) verbindet.

6. Vorrichtung nach Anspruch 3 oder 5, **dadurch gekennzeichnet, dass** die ersten Kopplungsmittel (21; 221) gestaltet sind, um einen Durchgang (22; 222) für den Zugfinger (10) einzugrenzen.

7. Vorrichtung nach Anspruch 6, **dadurch gekennzeichnet, dass** das erste Element (9; 109; 209) einen Metalldraht aufweist, dessen Formgebung zumindest Folgendes umfasst:
- einen ersten Abschnitt, der eine Halteschlinge (16; 116; 30) bildet, durch die ein Schussdraht (5) der ersten Wanne (1) geht, und
- einen zweiten Abschnitt, der die Form eine U-Schlaufe (21; 221) aufweist, die das ersten Kopplungsmittel bildet und den Durchgang (22; 222) für den Zugfinger (10) eingrenzt.

8. Vorrichtung nach einem der vorhergehenden Ansprüche, **dadurch gekennzeichnet, dass** an dem ersten Element (9; 109) zwei Abstandsstücke (19, 24) den Abstand des Endschussdrahts (5) der ersten Wanne (1) und des Endschussdrahts (5) der zweiten Wanne (2) bestimmen, wobei diese zwei Abstandsstücke (19, 24) zumindest vertikal voneinander beabstandet sind.

9. Vorrichtung nach Anspruch 7 und 8, **dadurch gekennzeichnet, dass** der Metalldraht, der das erste Element (9; 109) bildet, eine derartige Formgebung aufweist, , dass diese einen dritte und vierte Abschnitte (19, 24) umfasst, von denen jeder eines der zwei Abstandsstücke bildet und zwischen denen die U-Schlaufe (21), die die zwei ersten Kopplungsmittel bildet, vorgesehen ist.

10. Kabelwanne oder eine entsprechende Vorrichtung, die mindestens eine erste und eine zweite Wanne (1, 2) umfasst, die aneinander angefügt sind und von denen jede einen Boden sowie eine erste und eine zweite Seite umfasst, wobei die erste und die zweite Wanne (1, 2) jede ein Drahtgeflecht umfassen, das gebildet ist von einem Drahtgeflecht aus im Wesentlichen in Längsrichtung verlaufenden Kettendrähten (6, 7) verlötet mit im Wesentlichen in Querrichtung verlaufenden Schussdrähten (5), **dadurch gekennzeichnet, dass** sie eine erste (3) und eine zweite (4) Montagevorrichtung nach einem der vorhergehenden Ansprüche aufweist, wobei die erste Montagevorrichtung (3) die erste Seite der ersten Wanne (1) an der ersten Seite der zweiten Wanne (2) montiert, wobei die zweite Montagevorrichtung (4) die zweite Seite der ersten Wanne (1) an der zweiten Seite der zweiten Wanne (2) montiert.
